# EUROPEAN PATENT APPLICATION

(11) **EP 2 221 756 A2**
(43) Date of publication of application: **25.08.2010**
(21) Application number: 10153695.1
(22) Date of filing: 16.02.2010
(51) Int. Cl.: G06Q 10/00

(54) **Energy management**

(30) Priority: 18.02.2009 US 388112
(71) Applicant: General Electric Company, Schenectady, NY 12345 (US)
(72) Inventor: Roscoe, George William, West Hartford, CT 06107 (US); Besore, John Keith, Prospect, KY 40059 (US); Ilickovic, Darko, Mount Washington, KY 40047 (US); Papallo, Jr., Thomas Frederick, Farmington, CT 06032 (US); Rivers JR., Cecil, Plainville, CT 06062 (US); Schork, Brian Michael, Louisville, KY 40299 (US)
(74) Representative: Illingworth-Law, William Illingworth

(57) **Abstract**

An energy management system (200) includes a module (100) for an energy consuming device (120). The module has a module main controller (111) including a computer processor (112) in communication with a module computer readable storage medium (109) containing computer executable code. When the computer executable code is executed by the computer processor, it performs a method including determining whether a demand state is a peak demand state, employing a reduced operational mode of the energy consuming device during a peak demand state, and employing a normal operational mode of the energy consuming device during a demand state other than a peak demand state. In an embodiment, the system also includes a system main controller (201) in communication with the module.

## Description

### BACKGROUND OF THE INVENTION

This disclosure relates to energy management, and more particularly to energy management of energy-using devices, such as, but not limited to, household consumer electronics devices and appliances. The disclosure finds particular application to varying energy consumption of a device or of a group of devices in accordance with demand on energy supply as a whole, demand of individual devices, priority of devices within a group of devices, and user preferences, can include changing existing appliances via add-on features or modules, and can include incorporating new energy saving features and functions into new appliances.

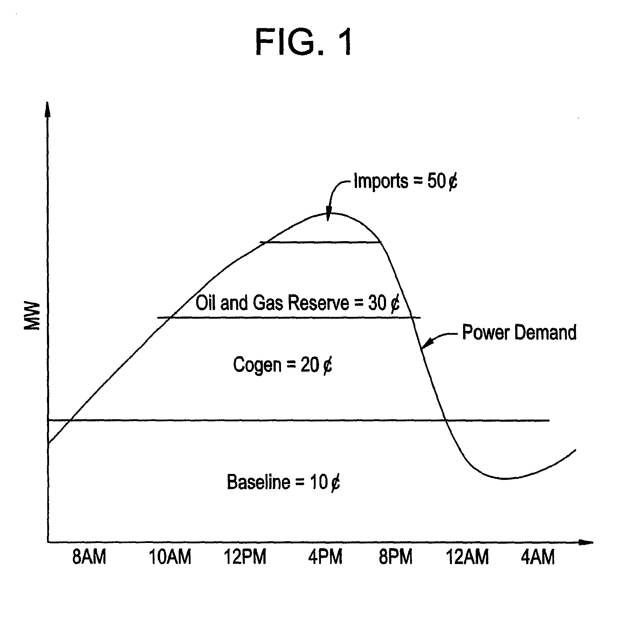

Currently, utilities generally charge some types of facilities, such as residential buildings, a flat rate per unit of energy delivered, but with increasing cost of fuel prices and high energy usage at certain parts of the day, utilities have to buy more energy to supply customers during peak demand, as illustrated in FIG. 1. As seen in FIG. 1, demand for, for example, electricity during the course of a day varies, with a peak demand typically occurring between 1 p.m. and 7 p.m. As demand increases, so does cost of power generation or supply. As also seen in FIG. 1, a utility company may have a baseline cost of ten cents per megawatt for example up to a particular level of energy demand, but above that level, cost increases to twenty cents per megawatt for example because of additional power generation equipment being brought on line or the utility being required to purchase energy. But the cost may increase at additional levels of generation due to the need to tap into reserve generation capability and/or to purchase power from outside sources connected to the grid. Thus, during peak demand, cost of energy production is highest, while at the lowest off-peak demand level, the cost of energy production is simply the baseline cost.

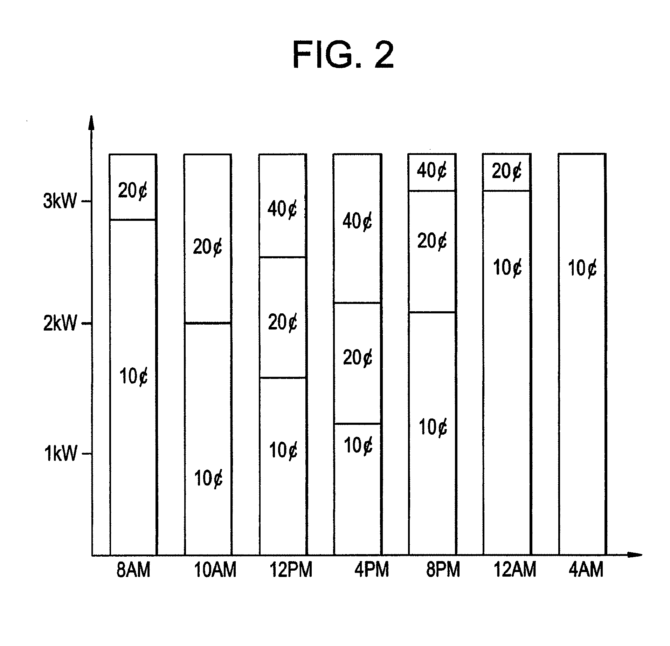

Consequently, utilities seek to charge higher rates during peak demand. To take the fluctuations of demand and energy production costs into account, rate schedules such as that illustrated in FIG. 2 have been developed that charge customers a first price per energy unit up to a first threshold number of energy units consumed during a particular time of day with a second rate applying to energy above the first threshold, and possibly including additional rates applying to additional consumption ranges. The thresholds and rates will vary with time of day and/or level of demand. If peak demand can be lowered, then a cost savings of significant proportion can be achieved for the customer and for the utilities, and the peak load that the utility has to accommodate can be reduced.

One proposed third party solution provides a system where a controller "switches" the actual energy supply to the energy consuming devices, such as appliances or control units, on and off. However, the solution provides no active control beyond the mere switching off the devices on and off. It is believed that others in the industry vary difference functions of energy consumer devices with demand. For example, it is believed that a system ceases some operations in a refrigerator during peak time. In a refrigerator, most energy is consumed to keep average freezer compartment temperature at a constant level. Recommended temperature level is based on bacteria multiplication with a recommended long term (1-2 month) food storage temperature of 0° F. Since research shows that bacteria population rise is a linear function of freezer compartment temperature (lower the temperature means lower increase in bacteria population), refrigerator designers arrange temperature controllers that pre-chill a freezer compartment before a defrost cycle. The pre-chill keeps an average temperature during a time interval that includes before, during, and after defrost at approximately the same level, such as, for example, 0° F. The pre-chill of the freezer compartment also affects temperature in the refrigerator compartment to at least some degree.

There are also currently different methods used to determine when variable electricity-pricing schemes should go into effect. For example, there are phone lines employed, schedules used, and wireless signals sent by the utility company in various "peak shaving" methods. However, such current peak shaving methods do not provide a maximal benefit for some energy consuming devices, such as a refrigerator will provide a maximal benefit. Further, different utility companies use different methods of communicating periods of high energy demand to their customers, while other utility companies simply use rate schedules that depend on the time of day.

Some utilities are moving to an Advanced Metering Infrastructure (AMI) system that needs to communicate with energy consuming devices, such as appliances, HVAC, water heaters, and the like in a home or office building. However, not all utility companies, which number more than 3,000 in the U.S. for electricity providers, will use the same communication method in the AMI system. Additionally, known systems do not communicate directly with the energy using devices.

There is thus a need for an energy management system and method that uses a variety of communication methods and protocols, that is modular, and that provides a standard method of communicating with energy using devices to interface with and control operational modes to main controllers of energy using devices that are so equipped. There is also a need to trigger "load shedding" responses in energy consuming devices and in groups of such devices as may be controlled by a main controller in a building, such as a residence or office building, or a unit within a building, such as an apartment or commercial space within a building.

### BRIEF DESCRIPTION OF THE INVENTION

An embodiment of an energy management module for an energy consuming device has a module main controller including a computer processor in communication with a module computer readable storage medium containing computer executable code. When the computer executable code is executed by the computer processor, it performs a method including determining whether a demand state is a peak demand state, employing a reduced operational mode of the energy consuming device during a peak demand state, and employing a normal operational mode of the energy consuming device during a demand state other than a peak demand state.

Another embodiment of an energy management module for an energy consuming device includes a module communications port and a module main controller including a computer processor in communication with the communications port. The computer processor of the module main controller is also in communication with a module computer readable storage medium containing computer executable code. The computer executable code, when executed by the computer processor, performs a method including receiving with the communications port information regarding an operational state of the energy consuming device, selectively receiving instruction signals via the communications port, processing received instruction signals, determining an operational mode to employ in accordance with at least the instruction signals, and, responsive to the determination of an operational mode to employ, instructing the energy consuming device to employ the operational mode.

An embodiment of an energy management system includes a module with a module communications port and a module main controller. The module main controller includes a computer processor in communication with the module communications port and with a module computer readable storage medium containing computer executable code. The computer executable code, when executed by the computer processor, performs a method including receiving with the module communications port information regarding an operational state of at least one energy consuming device, receiving instruction signals via the module communications port, determining an operational mode to employ in accordance with at least the instruction signals, and, responsive to the determination of an operational mode to employ, instructing the energy consuming device to employ the operational mode. The system also includes a system communications port and a system controller including a system computer processor in communication with the system communications port and with a system computer readable storage medium. The system computer readable storage medium contains computer executable code that, when executed by the system computer processor, performs a method including receiving with the system communications port information regarding a demand state of an energy supply and sending instruction signals to the module based on the demand state.

These and other advantages and features will become more apparent from the following description taken in conjunction with the drawings.

### BRIEF DESCRIPTION OF THE DRAWING

The subject matter which is regarded as the invention is particularly pointed out and distinctly claimed in the claims at the conclusion of the specification. The foregoing and other objects, features, and advantages of the invention are apparent from the following detailed description taken in conjunction with the accompanying drawings in which:
FIG. 1 is an illustration of the variation of energy demand during a typical day.
FIG. 2 is an illustration of a type of rate schedule that might be adopted by a utility company.
FIG. 3 is a schematic illustration of an energy management module according to embodiments.
FIG. 4 is a schematic illustration of a facility energy management system according to an embodiment.
FIG. 5 is a schematic illustration of a tone-based communication arrangement according to an embodiment.
FIG. 6 is a schematic illustration of an RFID communication arrangement according to an embodiment.
FIG. 7 is a schematic flow diagram illustrating a method according to an embodiment.

The detailed description explains embodiments of the invention, together with advantages and features, by way of example with reference to the drawings.

### DETAILED DESCRIPTION OF THE INVENTION

With reference to the accompanying Figures, examples of a facility energy management system and method according to embodiments of the invention are disclosed. For purposes of explanation, numerous specific details are shown in the drawings and set forth in the detailed description that follows in order to provide a thorough understanding of embodiments of the invention. It will be apparent, however, that embodiments of the invention may be practiced without these specific details. In other instances, well-known structures and devices are schematically shown in order to simplify the drawing.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one ore more other features, integers, steps, operations, element components, and/or groups thereof.

Broadly, embodiments of a system and method reduce energy consumption over an energy distribution network during on-peak or peak demand hours by reducing the energy demand on energy generation facilities. Embodiments also provide cost savings to the user/consumer/customer by reducing energy consumption of energy consuming devices under the customer's control during times when energy is more expensive, such as during peak demand. These benefits are provided via a system and method that are easy to use, convenient, and substantially transparent to the customer once set up and operating. Additional energy cost savings are enjoyed in embodiments by adding local energy storage and/or generation at customer sites and integrating control of such local energy storage and/or generation devices into the system and method of embodiments. Still more savings can be achieved by including energy consuming devices that have multiple levels of energy consumption via multiple operational modes, particularly such energy consuming devices that are "intelligent." That is, energy consuming devices each including a module with a controller that can process incoming signals and/or determine various ambient conditions and/or monitor operating variables of the respective device can provide more efficient, lower cost operation. Additionally, such intelligent energy consuming devices can provide an indication of a need for service or other attention. With wide usage of the system and method of embodiments, the resulting reduction in energy consumption during peak demand periods can reduce or eliminate rolling brownouts or blackouts that occur during such periods. In addition, the system and method of embodiments take advantage of numerous communications protocols to simplify installation and communication, such as, for example, WiFi, ZigBee, PLC, Ethernet, X10, FM, AM/SSB, Radio Broadcast Data System, and several additional simple, low cost protocols as will be described. These can be employed in single source embodiments, demand side management embodiments, and embodiments that employ a mixture thereof.

Still more savings are obtained in embodiments employing subscription based utility services in which a customer agrees to let another party, such as a utility company, control the energy consumption of facilities under the customer's control. In such embodiments, customers typically agree to eliminate their ability to override reduced energy consumption measures implemented by the system at the other party's instruction. The override capability is therefore disabled or the system notifies the other party of an override so that appropriate action, such as billing and/or cancellation of the subscription plan, can be taken.

While the instant disclosure is directed mostly to electricity consumption, it should be understood that embodiments of the inventive system can be applied to other utilities, such as, but not limited to, natural gas, heating oil, propane, water, and sewer. Future utilities or sources of energy are also contemplated, such as, but not limited to, hydrogen and ethanol. Additionally, a single implementation of a system according to embodiments can address a mixture of such services in a facility.

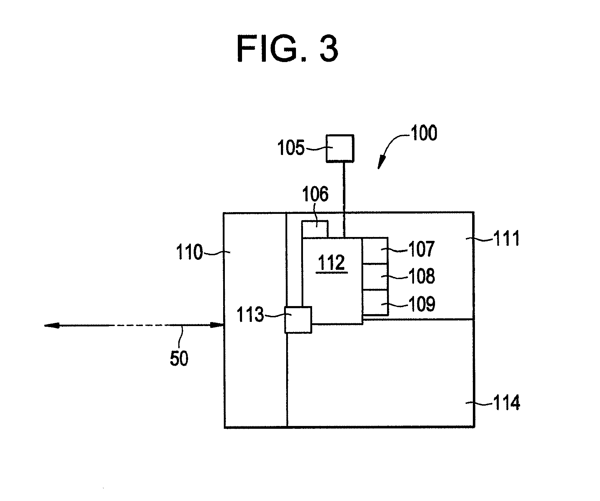

Embodiments are implemented via a module 100 connected to a respective energy consuming device 120, as schematically illustrated, for example, in FIG. 3. In a simple, low cost embodiment, the system 100 uses an ambient light sensor 105 to determine when it is morning, such as by light exceeding a predefined level. Responsive to a determination that it is morning, the module 100 puts and/or keeps the energy consuming device 120 in a reduced operational or energy-saving or peak mode for a predetermined period of time. In an embodiment, the light sensor 105 and counter 106 are included in the module 100 or separately on the energy consuming device 120. Additionally, for example, in the case of a refrigerator or other appliance or energy consuming device employing lighting, the ambient light sensor 105 can be used for dimming on-board lights when light is present around the device to reduce energy consumption, such as by limiting lighting energy use to a predefined level, particularly during a peak demand state. Further, in embodiments in which the energy consuming device 120 is itself a lamp or lighting system, the light sensor 105 provides information used to control or simply controls the energy consumption of the device 120. For example, the light sensor 105 can confirm that a lamp or lighting system is emitting an amount of light commensurate with a setting, such as a predefined light output level or and energy consumption rate of the lamp or lighting system.

An embodiment further incorporates a counter or timer 106 so that when light is detected for a predefined period the energy consuming device is placed in an energy saving operational mode. To improve operation, the module 100 can include a module main controller 111 that includes logic circuitry that receives a signal from the light sensor 105 and is connected to the counter or timer 106 so that the module main controller triggers an energy saving operational mode of the energy consuming device when detected light exceeds a predefined level for a predefined period of time. For example, the energy saving or reduced operational mode could start three hours after it is determined morning starts and be maintained until twelve hours after morning starts. The counter 106 also allows the module 100 to know that the room has been dark for a predetermined number of hours so that normal operation of the energy consuming device 120 can be restored.

An additional level of refinement is achieved in embodiments in which the module main controller 111 includes a computer processor 112 executing computer executable code read from a module computer readable storage medium 109 to make a determination of when an energy saving operational mode should be employed by the energy consuming device 120. The determination in an embodiment is based on the signal from the light sensor 105 and the counter or timer 106. Additionally, the module main controller 111 of an embodiment includes a clock 107, a calendar 108, and information stored on the computer readable storage medium109 about when the day starts based on a calendar.

In another embodiment, the module 100 includes a communications interface 110, a module main controller 111, and a port 113, such as a communications port, with which the module main controller 111 receives information regarding the operational state of the energy consuming device 120. A module user interface 114 is also provided in an embodiment and can take the form of a simple button or switch interface, a touch panel interface, and/or advantageously employs a graphical user interface via a display 115 of the module 100. The user interface 114 allows user input to the module main controller 111, such as, but not limited to, commanding initiation of a particular operational mode of the energy consuming device 120, providing information about the environment in which the energy consuming device 120 is installed, or initiating data transfer from a removable or remote computer readable storage medium. Additionally, the user interface 114 in an embodiment allows the user to override energy saving operational modes if the user so desires. The module user interface 114 selectively provides energy saving tips, information regarding energy usage, including estimates of energy usage for various operational changes, an indicator during peak or reduced operation mode, and/or other information in an embodiment, and can include device-specific information such as, for example, a counter to illustrate the energy impact of door opening on a refrigerator.

In operation, the module main controller 111 determines what operational mode the energy consuming device 120 should employ based on user-supplied information, pre-loaded information, information supplied from remote sources via communications systems, time of day, date, and user commands and imposes the determination the energy consuming device 120 accordingly. In an embodiment, the module 100 is directly connected to various components of the energy consuming device 120 and directly imposes the determination of operational mode by directly controlling the components. For example, the module 100 can be built into a refrigerator/freezer and can operate the compressor(s), fan(s), and light(s) of the refrigerator/freezer in accordance with the operational mode the module main controller 111 determines should be employed. In another embodiment, the module main controller 111 interacts with a controller 201 of the energy consuming device to impose the operational mode. For example, the module 100 can be connected to a "smart" refrigerator/freezer, such as as an after-market device, and can instruct a controller 201 of the device to implement operational modes already incorporated into the device controller 201. Thus, the module 100 can be added after the energy consuming device 120 is installed in a facility, such as an externally mounted module at the wall electrical receptacle or anywhere outside or on the energy consuming device 120, or can be installed as part of assembly or manufacture, such as an integral module mounted inside the energy consuming device 120. Power for the module 100 can be supplied by the device 120, via a separate power supply, and/or with batteries, such as rechargeable batteries set to charge during normal operational modes of the energy consuming device 120 or ordinary batteries, such as alkaline batteries. In embodiments in which the module 100 is powered by the energy consuming device 120, the module 100 is continuously powered, while in other embodiments, the device 120 turns the module 100 off until a decision about power usage must be made, eliminating the standby power draw of the module 100. Additionally, the module 100 in an embodiment includes a low power or hibernation mode in which the module 100 draws only enough power to enable it to monitor for a call from the energy consuming device 120 and come to a full power mode. In an embodiment in which the module 100 is powered separately, the device 120 goes to a low energy state or completely off while the module 100 continues to monitor the environment.

In another embodiment, the module main controller 111 communicates directly with a meter 11 or an external party 10, such as a utility company, via the port 113 and a communications network 50 to obtain information, such as an operating state of the utility, rate schedules, and/or subscription information and to determine the operational state of each associated energy consuming device 120 to employ. For example, the module main controller 111 can obtain a demand state of an electric utility company to determine whether the company is operating at peak demand or at off-peak demand to determine how and/or whether the energy consuming device 120 should be operated. In an embodiment, a utility meter 11 provides the information to the module main controller 111 as opposed to the module main controller 111 communicating with the external party 10 directly.

The module 100 of an embodiment provides an interface between the external party 10 and the energy consuming device 120 that remains the same regardless of the type of device to which the module 100 is connected. Thus, the external party 10 can talk to virtually any energy consuming device without needing to know what kind of device it is, and the module 100 interprets what the external party 10 sends and instructs the energy consuming device 120 to which it is connected in terms it can understand. Additionally, since utility companies or regions may have different communication methods, protocol methods, and the like, the module 100 can be made with different editions to accommodate company or regional variations and/or to include equipment and/or software necessary to communicate with multiple utilities in multiple formats and/or multiple communication protocols so that additional communications equipment and/or software need not be installed at or after installation.

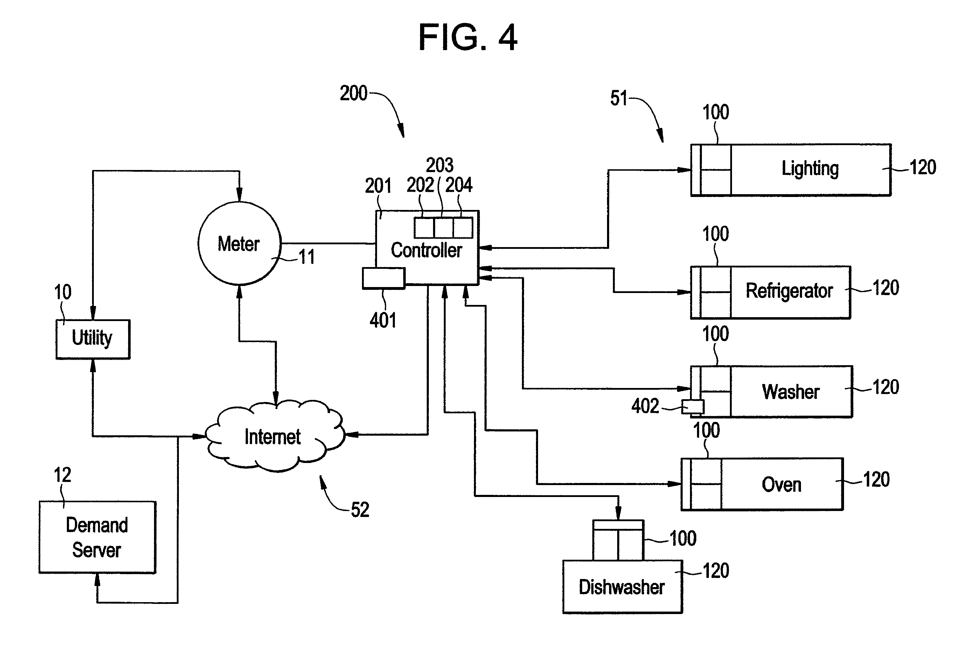

Instead of communicating directly with the meter 11 or an external party, the module 100 in an embodiment such as that illustrated, for example, in FIG. 4, is responsive to a facility energy management system 200. Such a system 200 includes a system controller 201 that includes a computer processor 202 that executes computer executable instructions it reads from a system computer readable storage medium 203. The system controller 201 communicates with the module 100, such as via a system communications port 204 and/or the port 113, and/or other similar modules in a facility via an internal communications network 51. Additionally, the system controller 201 in an embodiment communicates with an external party 10, such as a utility company, via an external communications network 52 to obtain information, such as an operating state of the utility, a limit to be imposed on the facility, rate schedules, and/or subscription information for the facility, such as from a demand server 12 operated by the utility or a third party. For example, the system controller 201 can obtain a demand state of an electric utility company to determine whether the company is operating at peak demand or at off-peak demand to determine how and/or which energy consuming devices in the facility should be operated. In an embodiment, a utility meter 11 provides the information to the system controller 201 as opposed to the system controller 201 communicating with the utility directly. The system controller 201 passes through information and/or makes determinations of operational modes itself and sends instructions to the module 100.

In a fashion similar to the module 100 that communicates directly with the meter 11 and/or external party 10, the module 100 of an embodiment using a system 200 provides an interface between the system controller 201 and the energy consuming device 120 that remains the same regardless of the type of device to which it is connected. Thus, the same system controller 201 can talk to virtually any energy consuming device without needing to know what kind of device it is, and the module 100 interprets what the system controller 201 sends and instructs the energy consuming device 120 to which it is connected in terms it can understand. Additionally, since utility companies or regions may have different communication methods, protocol methods, and the like, the module 100 can be made to receive the same information or signals from the system controller 201 and the system controller 201 can be made with different editions to accommodate company or regional variations. In embodiments, the system controller 201 and/or the module main controller 111 is configured to receive multiple signals to accommodate multiple inputs from several utility companies employing varying communication protocols. In other words, the system controller 201 in an embodiment includes equipment and/or software necessary to communicate with multiple utilities in multiple formats and/or multiple communication protocols so that additional communications equipment and/or software need not be installed at or after installation.

Where a customer override can be employed, such as, for example, via the module user interface 114, the module 100 receives signals, such as instruction signals, from the external party 10 and/or the system controller 201 via the communication interface 110, processes the signals, and determines which operational mode to employ in accordance with the signals and superceding the signals responsive to an override command having been received by the module 100. In an embodiment in which subscription services or the like are employed, the module main controller 111 prevents execution of override instructions or instruction signals received from the user or from the system controller 201, though in an alternative embodiment, the module main controller 111 executes but logs any override instructions and notifies the external party 10 and/or system controller 201 of the override(s). In another embodiment in which subscription services and a system 200 are employed, the system controller 201 instructs the module main controller 111 that overrides are not permitted and the module main controller 111 refuses to execute override instructions attempted via the module user interface 114. Alternatively, overrides are simply logged and reported by the system controller 201 and/or the module main controller 111.

The module main controller 111 of embodiments receives information via the communications network 50, which can include computer networks, the internet, power line transmission/reception, electromagnetic radiation broadcast/reception, telephone networks, a Local Area Network, and other suitable forms as may be appropriate for a particular application.

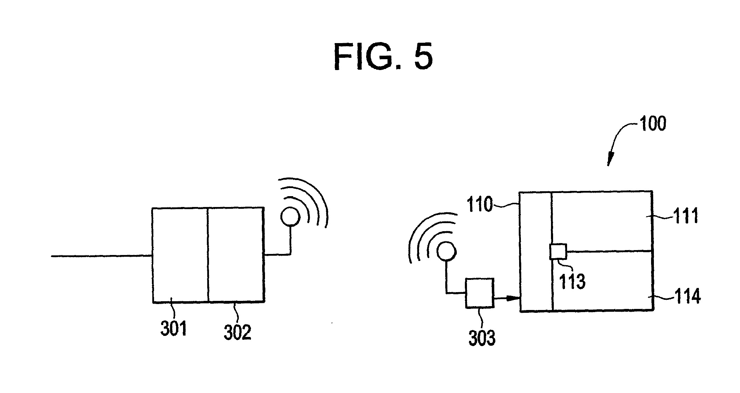

In an embodiment, information regarding a demand state, demand limit, and/or operational mode to be employed is conveyed using tones. For example, as seen in FIG. 5, a tone generator 301 responsive to a rate charged for energy generates a tone, such as a continuous tone, indicative of a respective rate. The tone is transmitted via a radio frequency transmitter 302, such as a transmitter using a frequency in the FM band, on a carrier frequency. While FM band radio frequencies are identified as used in an embodiment, it should be clear that any other suitable radio frequencies or other frequency ranges of electromagnetic radiation could be employed. The module 100 in such an embodiment includes a receiver 303 that receives the carrier frequency and decodes the tone or sends the received signal to the module main controller 111 for decoding. The module 100 then instructs the energy consuming device 120 to employ an operational state in accordance with the received tone. The tone generator in another embodiment generates a combination of tones to convey information, and another embodiment sends tones via hard wire connections. For example, when passing rate information such as rate 1, 2, 3, or 4, using different tones for respective rates is sufficient. Alternatively, assigning a binary number to a given tone allows more sophisticated messaging using binary coding with multiple tones, the module interpreting the coded messages and instructing the energy consuming device 120 as appropriate.

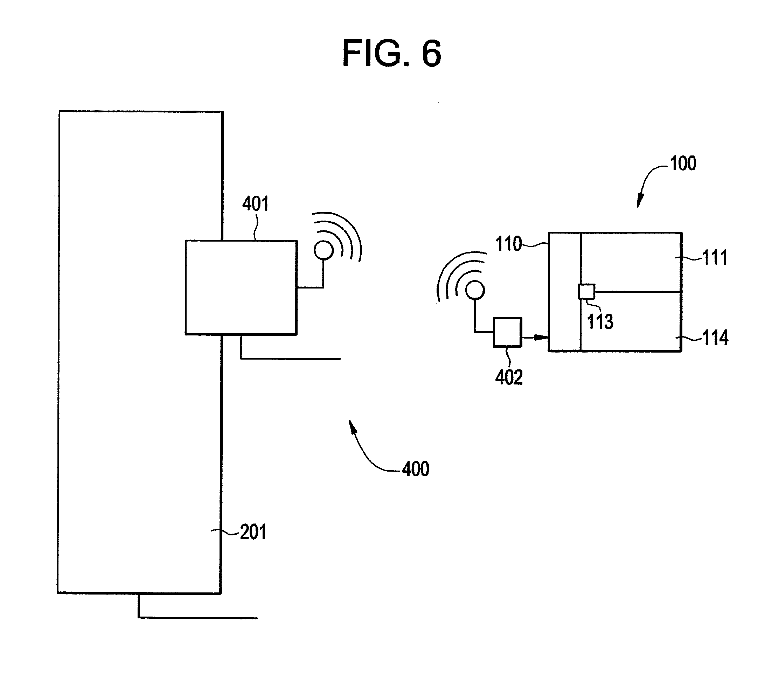

In an embodiment, the communications network 50 employs a radio frequency identification (RFID) tag system 400 with a RFID master 401 as part of or responsive to the external party 10, the system controller 201, as seen in FIGS. 4 and 6. Each module 100 then includes or is responsive to a RFID tag 402, also referred to as a "slave device," with its own respective resonant frequency unique within at least the range of the RFID master device 401. The RFID tag 402 passes signals received to the module main controller 111. In operation, when the demand state or demand limit changes, or when a change in operational mode is required of an energy consuming device 120, the RFID master 401 sends the change or a command to the energy consuming device 120 by resonating at the respective resonant frequency of the energy consuming device 120. In an embodiment, the RFID tag 402 is an active RFID tag that can store data transmitted by the RFID master 401 via a pulse of energy at a resonant frequency of the RFID tag 402. Additionally, embodiments employ tags with binary or other codes unique within the system to enable the RFID master device to instruct the slave devices.

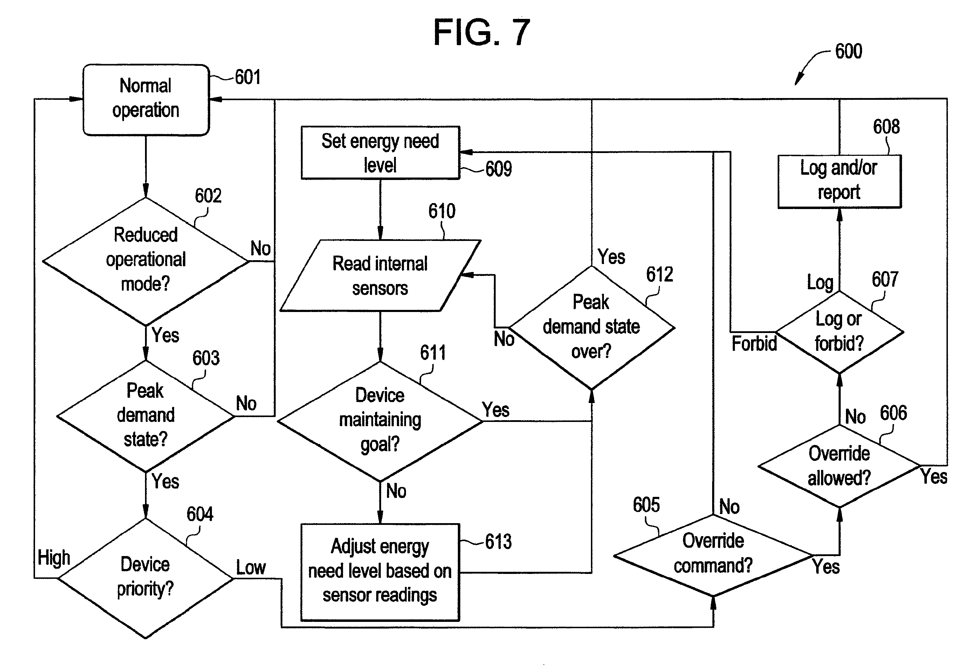

As seen in FIG. 7, an embodiment includes normal operation of an energy consuming device 120 (block 601) and checking to see if the energy consuming device 120 is or should be in a reduced operational mode (block 602). If not, then normal operation continues (block 601). If so, then the method includes checking to see if there is a peak demand state (block 603) and checking device priority responsive to a peak demand state (block 604). If there is no peak demand state, or if there is a peak demand state and the energy consuming device 120 has a high device priority, then normal operation continues (block 601). If there is a peak demand state and the device priority is low, then the method includes checking to see if an override command or instruction has been received (block 605). If an override command has been received, the method includes checking to see if overrides are allowed (block 606). If overrides are allowed, then the method proceeds by instructing the energy using device(s) to employ normal operational mode (block 601). If overrides are not allowed, then the method includes checking to see whether overrides are logged and/or reported or forbidden (block 607). If overrides are logged and/or reported, then the method includes logging and/or reporting the override (block 608) and instructing the energy using device(s) to employ normal operational mode (block 601).

If overrides are forbidden, the method proceeds by setting an energy need level (block 609), reading any internal sensors (block 610), and determining whether the energy consuming device 120 is maintaining a goal or target performance (block 611). If the energy consuming device 120 is maintaining the goal or target performance, then the method checks to see whether the peak demand state is over (block 612) and, if the peak demand state continues, returns to reading internal sensors (block 610) and/or checking the performance of the energy consuming device 120 (block 611). If the peak demand state is over, then normal operation resumes (block 601). If the device is not maintaining its goal as determined in block 611, then the energy need level is adjusted (block 613) based on, for example, sensor readings, and the method proceeds to block 612 to check whether the peak demand state is over. The portion of the method 600 in an embodiment is implemented and performed in the system controller 201, but in another embodiment is implemented and performed in the module main controller 111, and in a third embodiment is spread across both the system controller101 and the module main controller 111.

A method according to embodiments is realized via, and a system according to embodiments includes, computer-implemented processes and apparatus for practicing such processes, such as the system controller 201 and/or the module main controller 111. Additionally, an embodiment includes a computer program product including computer code, such as object code, source code, or executable code, on tangible media, such as magnetic media (floppy diskettes, hard disc drives, tape, etc.), optical media (compact discs, digital versatile/video discs, magneto-optical discs, etc.), random access memory (RAM), read only memory (ROM), flash ROM, erasable programmable read only memory (EPROM), or any other computer readable storage medium on which the computer program code is stored and with which the computer program code can be loaded into and executed by a computer. When the computer executes the computer program code, it becomes an apparatus for practicing the invention, and on a general purpose microprocessor, specific logic circuits are created by configuration of the microprocessor with computer code segments. A technical effect of the executable instructions is to implement energy consumption reduction and/or optimization in an energy consuming device, a facility with at least one energy consuming device, and/or an energy supply distribution system.

The computer program code is written in computer instructions executable by the controller, such as in the form of software encoded in any programming language. Examples of suitable programming languages include, but are not limited to, assembly language, VHDL (Verilog Hardware Description Language), Very High Speed IC Hardware Description Language (VHSIC HDL), FORTRAN (Formula Translation), C, C++, C#, Java, ALGOL (Algorithmic Language), BASIC (Beginner All-Purpose Symbolic Instruction Code), APL (A Programming Language), ActiveX, HTML (HyperText Markup Language), XML (extensible Markup Language), and any combination or derivative of one or more of these.

The flow diagrams depicted herein are just one example. There may be many variations to this diagram or the steps (or operations) described therein without departing from the spirit of the invention. For instance, the steps may be performed in a differing order or steps may be added, deleted or modified. All of these variations are considered a part of the claimed invention.

The corresponding structures, materials, acts, and equivalents of any and all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Aspects of the present invention are defined in the following numbered clauses:
1. An energy management module for an energy consuming device, the module comprising:
   a module main controller including a computer processor in communication with a module computer readable storage medium containing computer executable code that when executed by the computer processor performs a method comprising:
      determining whether a demand state is a peak demand state;
      employing a reduced operational mode of the energy consuming device during a peak demand state; and
      employing a normal operational mode of the energy consuming device during a demand state other than a peak demand state.
2. The module of clause 1 wherein determining whether a demand state is a peak demand state comprises receiving a demand state from a remote demand server.
3. The module of clause 1 or clause 2 further comprising a user interface and wherein determining whether a demand state is a peak demand state comprises receiving a demand state from the user interface.
4. The module of any one of the preceding clauses wherein determining whether a demand state is a peak demand state comprises receiving a demand state from the computer readable storage medium.
5. The module of any one of the preceding clauses further comprising a light sensor in communication with the module main controller, a counter in communication with the module main controller, and wherein determining whether a demand state is a peak demand state comprises monitoring a light level, starting a counter when the light level exceeds a predefined value, and determining that the demand state is a peak demand state when the light level exceeds the predefined value for a predefined period.
6. The module of any one of the preceding clauses further comprising a light sensor in communication with the module main controller employing a reduced operational mode includes reducing lighting energy consumption responsive to a light level detected by the light sensor. (I think reclause or add detail about controlling lighting, biggest value add)
7. The module of any one of the preceding clauses further comprising a Radio Frequency IDentification (RFID) tag in selective communication with and responsive to a RFID master.
8. The module of clause 7 wherein the RFID tag has a respective resonant frequency that is unique within a range of the RFID master.
9. The module of clause 7 wherein the RFID tag is an active RFID tag comprising a data storage device and determining whether a demand state is a peak demand state further comprises selectively storing data received from the RFID master via a pulse of energy at a resonant frequency of the RFID tag.
10. An energy management module for an energy consuming device, the module comprising:
   a module communications port;
   a module main controller including a computer processor in communication with the communications port and with a module computer readable storage medium containing computer executable code that when executed by the computer processor performs a method comprising:
      receiving with the communications port information regarding an operational state of the energy consuming device; and
      selectively receiving instruction signals via the communications port;
   processing received instruction signals;
   determining an operational mode to employ in accordance with at least the instruction signals; and
   responsive to the determination of an operational mode to employ, instructing the energy consuming device to employ the operational mode.
11. The module of clause 10 wherein the communications port is responsive to an override command of the information received by the module main controller and the method further comprises superceding the signals responsive to an override command having been received by the port.
12. The apparatus of clause 10 or clause 11 wherein the module further comprises a user interface.
13. The module of clause 12 wherein the method further comprises selectively providing at least one of energy saving tips, information regarding energy usage, including estimates of energy usage for various operational changes, an indicator during on-peak mode, and a counter to illustrate the energy impact of door opening with the user interface.
14. The module of any one of clauses 10 to 13 further comprising a receiver connected to the communications port and in communication with a transmitter, and receiving signals further comprises receiving a signal carried by a transmission of the transmitter and indicative of a respective rate.
15. The module of clause 14 wherein the signal comprises a continuous tone.
16. The module of clause 14 wherein the signal comprises a combination of tones.
17. The module of any one of clauses 10 to 16 wherein the carrier frequency is in the FM band.
18. The module of any one of clauses 10 to 17 wherein the method comprises monitoring a parameter indicative of a performance of the energy consuming device and, responsive to an indication of performance below a predefined level, sending a trouble signal to an external party.
19. The module of any one of clauses 10 to 18 wherein the instruction signals originate from a system controller of a facility energy management system.
20. An energy management system comprising:
   a module with a module communications port and a module main controller, the module main controller including a computer processor in communication with the module communications port and with a module computer readable storage medium containing computer executable code that when executed by the computer processor performs a method comprising:
      receiving with the module communications port information regarding an operational state of at least one energy consuming device;
      receiving instruction signals via the module communications port;
      determining an operational mode to employ in accordance with at least the instruction signals; and
      responsive to the determination of an operational mode to employ, instructing the energy consuming device to employ the operational mode;
   a system communications port; and
   a system controller including a system computer processor in communication with the system communications port and with a system computer readable storage medium containing computer executable code that when executed by the system computer processor performs a method comprising:
      receiving with the system communications port information regarding a demand state of an energy supply; and
      sending instruction signals to the module based on the demand state.
21. The system of clause 20 the information regarding a demand state of an energy supply originates from a remote computer based demand server.

## Claims

1. An energy management module (100) for an energy consuming device (120), the module comprising:
a module main controller (111) including a computer processor (112) in communication with a module computer readable storage medium (109) containing computer executable code that when executed by the computer processor performs a method comprising:
determining whether a demand state is a peak demand state;
employing a reduced operational mode of the energy consuming device during a peak demand state; and
employing a normal operational mode of the energy consuming device during a demand state other than a peak demand state.

2. The module of claim 1 wherein determining whether a demand state is a peak demand state comprises at least one of receiving a demand state from a remote demand server, receiving a demand state from a user interface (114), and receiving a demand state from the computer readable storage medium.

3. The module of claim 1 or claim 2, further comprising a light sensor (105) in communication with the module main controller and wherein determining whether a demand state is a peak demand state comprises monitoring a light level, starting a counter (106) when the light level exceeds a predefined value, and determining that the demand state is a peak demand state when the light level exceeds the predefined value for a predefined period.

4. The module of any one of the preceding claims, further comprising a light sensor in communication with the module main controller and wherein employing a reduced operational mode includes reducing lighting energy consumption responsive to a light level detected by the light sensor.

5. The module of any one of the preceding claims, further comprising a Radio Frequency IDentification (RFID) tag (402) in selective communication with and responsive to a RFID master (401), the RFID tag being one of a passive tag and an active tag comprising a data storage device and determining whether a demand state is a peak demand state further comprises selectively storing data received from the RFID master via a pulse of energy at a resonant frequency of the RFID tag.

6. The module of any one of the preceding claims, further comprising a module communications port (113) in communication with the module main controller (111) and the computer processor (112) and wherein:
determining whether a demand state is a peak demand state comprises receiving with the communications port information regarding an operational state of the energy consuming device; and
employing a reduced operational mode of the energy consuming device during a peak demand state and employing a normal operational mode of the energy consuming device during a demand state other than a peak demand state comprises:
selectively receiving instruction signals via the communications port;
processing received instruction signals;
determining an operational mode to employ in accordance with at least the instruction signals; and
responsive to the determination of an operational mode to employ, instructing the energy consuming device to employ the operational mode.

7. The module of claim 6 wherein the communications port is responsive to an override command of the information received by the module main controller and the method further comprises superceding the signals responsive to an override command having been received by the port.

8. The module of claim 6 or claim 7 further comprising a receiver connected to the communications port and in communication with a transmitter, and receiving signals further comprises receiving a signal carried by a transmission of the transmitter and indicative of a respective rate, the signal comprising one of a continuous tone and a combination of tones.

9. The module of any one of claims 6 to 8 wherein the method further comprises monitoring a parameter indicative of a performance of the energy consuming device and, responsive to an indication of performance below a predefined level, sending a trouble signal to an external party.

10. The module of any one of the preceding claims wherein the module is part of an energy management system (200) comprising a system communications port (204) and a system controller (201), the system controller including a system computer processor (202) in communication with the system communications port and with a system computer readable storage medium (203) containing computer executable code that when executed by the system computer processor performs a method comprising:
receiving with the system communications port information regarding a demand state of an energy supply; and
sending instruction signals to the module based on the demand state.
